Europäisches Patentamt

European Patent Office

Office européen des brevets

(19)

(11) **EP 0 715 400 B1**

(12) **FASCICULE DE BREVET EUROPEEN**

(45) Date de publication et mention
de la délivrance du brevet:
**01.04.1998 Bulletin 1998/14**

(51) Int Cl.[6]: **H02P 9/10**

(21) Numéro de dépôt: **95402685.2**

(22) Date de dépôt: **29.11.1995**

(54) **Dispositif de régulation désensibilisée de la tension statorique d'un alternateur**

Desensibilisierte Regelvorrichtung für die Statorspannung eines Wechselstromgenerators

Desensitized stator voltage control device for an alternator

(84) Etats contractants désignés:
**DE SE**

(30) Priorité: **30.11.1994 FR 9414400**

(43) Date de publication de la demande:
**05.06.1996 Bulletin 1996/23**

(73) Titulaire: **ELECTRICITE DE FRANCE
Service National
75008 Paris (FR)**

(72) Inventeurs:
• **Bourles, Henri
F-92170 Vanves (FR)**
• **Heniche, Annissa
F-75013 Paris (FR)**
• **Houry, Marie-Pierre
75014 Paris (FR)**

(74) Mandataire: **Polus, Camille et al
c/o Cabinet Lavoix
2, Place d'Estienne d'Orves
75441 Paris Cedex 09 (FR)**

(56) Documents cités:
**EP-A- 0 066 651** **EP-A- 0 377 327**

• **EUROPEAN TRANSACTIONS ON ELECTRICAL POWER ENGINEERING, vol. 3, no. 6, Novembre 1993 BERLIN DE, pages 443-451, XP 000422505 D.P. PAPADOPOULOS ET AL 'Robust Excitation Controller Design for Synchronous Generators Using Output Feedback'**
• **IEEE TRANSACTIONS ON ENERGY CONVERSION, vol. 5, no. 4, Décembre 1990 NEW YORK US, pages 673-678, XP 000172407 CHENGXIONG MAO ET AL 'AN ADAPTIVE GENERATOR EXCITATION CONTROLLER BASED ON LINEAR OPTIMAL CONTROL'**
• **IEE PROCEEDINGS D, vol. 138, no. 4, Juillet 1991, STEVENAGE GB, pages 363 - 371, XP240901 P. WOZNIAK ET AL 'Feedback stabilisation of synchronous generator by extended linearisation'**

EP 0 715 400 B1

## Description

La présente invention concerne un dispositif de régulation de la tension statorique d'un alternateur couplé à un réseau électrique, ce dispositif résultant d'une approximation linéaire de l'alternateur couplé au réseau électrique autour d'un point de fonctionnement nominal défini par plusieurs paramètres de fonctionnement de l'alternateur et comportant plusieurs boucles de contre-réaction associées à des gains respectifs agissant sur plusieurs variables d'état mesurées en sortie de l'alternateur ainsi que sur l'intégrale d'une erreur de consigne définie par la différence entre la tension statorique et une valeur de consigne, pour définir à partir de la valeur de consigne, une variable de commande de l'alternateur appliquée à l'entrée de celui-ci pour maintenir la valeur de la tension statorique proche de la valeur de consigne.

L'invention s'applique en particulier aux groupes turbo-alternateurs couplés à un réseau électrique et équipés d'un régulateur de vitesse indépendant. Dans une telle régulation, l'objectif est d'agir sur la tension d'excitation de l'alternateur afin d'assurer, quel que soit le point de fonctionnement dans lequel se trouve la machine, la stabilité de l'alternateur, encore appelé système dans la suite de la description, le maintien de la tension statorique à une valeur voisine de la tension de consigne, et enfin des performances satisfaisantes dans le cas d'échelon de tension de consigne de courts-circuits, de report de charge ou encore de variation de fréquence du réseau.

La difficulté liée à la conception de régulateurs de tension est qu'ils doivent apporter une solution à des perturbations de natures très différentes, les solutions apportées à ces différents problèmes ayant parfois des effets antagonistes.

On connaît actuellement différentes méthodes de conception de régulateurs de tension, comme par exemple la méthode de placement des pôles, la commande optimale linéaire quadratique ou encore la synthèse dite H-infini. Cependant, ces différentes méthodes ne sont pas totalement satisfaisantes puisque les régulateurs obtenus offrent une assez mauvaise robustesse paramétrique, c'est-à-dire qu'ils sont très sensibles aux erreurs commises sur les valeurs des paramètres de modélisation ou aux variations de ceux-ci.

Le but de la présente invention est donc de fournir un dispositif de régulation de tension permettant de répondre aux exigences de stabilité quel que soit le point de fonctionnement du système, et qui de plus soit robuste vis-à-vis des incertitudes paramétriques dues à la modélisation et aux modifications de la topologie du réseau électrique.

A cet effet, la présente invention a pour objet un dispositif de régulation de la tension statorique d'un alternateur couplé à un réseau électrique, ce dispositif résultant d'une approximation linéaire de l'alternateur couplé au réseau électrique autour d'un point de fonctionnement nominal défini par plusieurs paramètres de fonctionnement de l'alternateur et comportant plusieurs boucles de contre-réaction associées à des gains respectifs agissant sur plusieurs variables d'état mesurées en sortie de l'alternateur ainsi que sur l'intégrale d'une erreur de consigne définie par la différence entre la tension statorique et une valeur de consigne, pour définir à partir de la valeur de consigne, une variable de commande de l'alternateur appliquée à l'entrée de celui-ci pour maintenir la valeur de la tension statorique proche de la valeur de consigne, caractérisé en ce que les gains du dispositif sont obtenus par minimisation de l'espérance mathématique d'un critère quadratique qui est fonction d'un vecteur d'état regroupant les dérivées par rapport au temps des variables d'état de l'alternateur et l'erreur de consigne et de la dérivée par rapport au temps de la variable de commande, ces variables étant respectivement l'état et l'entrée d'un modèle linéaire, appelé système augmenté, dont la matrice d'état et la matrice d'entrée dépendent de plusieurs des paramètres de l'alternateur et en ce que les gains sont déterminés pour minimiser en outre les sensibilités du vecteur d'état et de la dérivée par rapport au temps de la variable de commande relativement à de petites variations d'au moins l'un desdits plusieurs paramètres de l'alternateur autour du point de fonctionnement nominal créant ainsi une désensibilisation de l'alternateur régulé vis-à-vis desdits plusieurs paramètres.

Le dispositif de régulation peut également comporter une ou plusieurs des caractéristiques suivantes :

- ledit critère quadratique est fonction des dérivées partielles du vecteur d'état et de la dérivée par rapport au temps de la variable de commande par rapport aux paramètres de l'alternateur et la désensibilisation de l'alternateur régulé est réalisée par minimisation dudit critère quadratique ;
- le modèle linéaire duquel résultent les variables d'état utilisées dans le vecteur d'état est un modèle réduit à un ordre inférieur d'un modèle linéaire complet par une méthode de réalisation équilibrée consistant à minimiser une norme de la différence entre la matrice de transfert du modèle complet et celle du modèle réduit ;
- les gains sont déterminés par une méthode itérative consistant à réaliser à chaque étape une synthèse des gains par une méthode de commande linéaire quadratique gaussienne, consistant à minimiser un critère quadratique, appliquée à un modèle augmenté fonction d'une représentation d'état du dispositif de régulation obtenu avec les gains calculés à l'étape précédente et de la modélisation linéaire du système augmenté ;
- chaque étape de synthèse des gains est suivie par une réduction à un ordre inférieur de la représentation d'état associée à ces gains par une méthode de réalisation équilibrée ;
- les variables d'état sont la vitesse angulaire, la tension statorique et la puissance électrique.

La présente invention sera mieux comprise à la lecture de la description qui va suivre, donnée uniquement à titre d'exemple et faite en se référant aux dessins sur lesquels :

- la figure 1 est un organigramme d'une procédure itérative mise en oeuvre pour la détermination des gains du dispositif de régulation, et
- la figure 2 est un schéma synoptique d'un alternateur régulé utilisant un dispositif de régulation selon l'invention.

Dans la description qui va suivre, l'alternateur est modélisé ou approximé suivant le modèle connu de l'alternateur connecté à un réseau infini. Dans ce cas, les paramètres de ce système sont entièrement déterminés à partir du point de fonctionnement défini par la puissance active P, la puissance réactive Q, la tension statorique $V_s$ et la longueur de la ligne X.

Ainsi, dans cette modélisation, l'ensemble des points de fonctionnement admissibles peuvent être définis à partir de ces quatre grandeurs, les variations de ces grandeurs correspondant aux variations paramétriques du système.

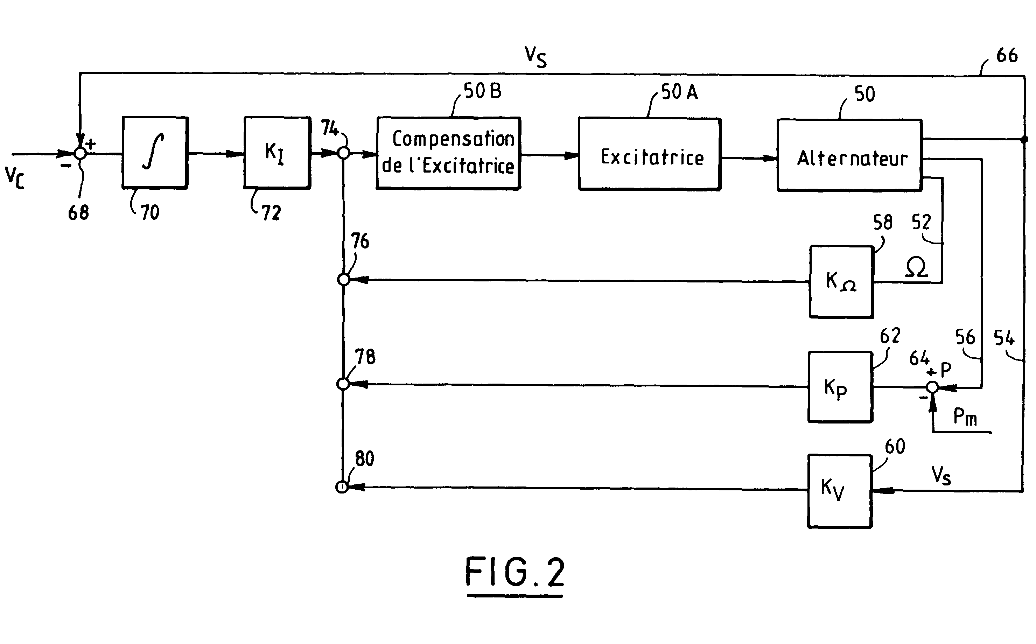

Le modèle défini précédemment permet de déterminer des gains notés $K_\Omega$, $K_V$, $K_P$, et $K_I$ du dispositif de régulation, utilisés dans des boucles de contre-réaction en combinaison avec des variables d'état mesurées à la sortie de l'alternateur afin de définir à partir d'une valeur de consigne $V_C$ une variable u de commande de l'alternateur, comme cela est représenté sur la figure 2 et sera décrit plus en détail dans la suite de la description.

Afin d'obtenir un modèle linéaire aussi fiable que possible, un modèle complet non linéaire d'ordre cinq est tout d'abord obtenu de manière classique à partir des équations régissant le fonctionnement de l'alternateur connecté au réseau infini.

Ce modèle est linéarisé autour d'un point de fonctionnement nominal afin de déterminer un modèle linéaire complet d'ordre cinq, qui peut s'exprimer pour de petites variations par la représentation d'état suivante :

$$\dot{x}_5 = A_5\, x_5 + B_5 u \qquad\qquad (0)$$

$$y = C_5\, x_5$$

La signification physique des variables d'état de ce modèle est sans intérêt pour la suite de la description, aussi elle ne sera pas détaillée ici. De plus, ces variables d'état ne sont pas mesurables.

Pour la détermination des gains $K_\Omega$, $K_V$, $K_P$ et $K_I$ du dispositif de régulation, on préfère utiliser des variables d'état mesurables telles que la vitesse angulaire $\Omega$, la tension statorique $V_s$ et la puissance électrique P. C'est sur ces variables d'état que les gains agissent dans le dispositif de régulation.

Pour ce faire, on réduit le modèle précédent à un modèle linéaire d'ordre trois, suivant la méthode classique de la réalisation équilibrée.

Cette méthode consiste à minimiser dans l'espace de Hardy une norme notée H-infini, de la différence entre la matrice de transfert du modèle linéaire complet et celle du modèle réduit.

La réduction du modèle linéaire d'ordre cinq à un modèle d'ordre trois et un changement de base, opération classique en la matière, permettent d'exprimer le modèle linéaire d'ordre trois de l'alternateur connecté au réseau infini au point de fonctionnement choisi sous la forme suivante :

$$\dot{x}_3 = A_3\, x_3 + B_3 u \qquad\qquad (1)$$

$$y = x_3 \qquad \text{avec } x_3 = [\Omega\ V_S\ P].$$

Comme cela est connu dans l'état de la technique, afin de maintenir la valeur de la variable de sortie à réguler, supposée ici être la tension statorique notée $V_S$, égale à la valeur de consigne notée $V_C$, il est souhaitable que la variable u de commande de l'alternateur, engendrée par le dispositif de régulation ait un effet intégral.

Pour ce faire, et de manière classique, on procède à une augmentation du modèle (1) en faisant intervenir dans un modèle dit "augmenté" une erreur de consigne notée e égale à la différence entre la tension statorique $V_S$ et la valeur de la consigne $V_c$. Ce modèle augmenté est alors de la forme :

$$\dot{x} = A\, x + Bu_f \qquad\qquad (2)$$

$$y = x$$

où

$$\mathbf{x} = \begin{bmatrix} \mathbf{x_3} \\ \mathbf{e} \end{bmatrix} ; \quad \mathbf{e} = V_s - V_c ; \quad A = \begin{bmatrix} A_3 & 0 \\ [0\ 1\ 0] & 0 \end{bmatrix} ; \quad B = \begin{bmatrix} B_3 \\ 0 \end{bmatrix} ; \quad u_f = \dot{u}$$

Dans ce modèle, la variable $u_f$ est la dérivée par rapport au temps de la variable u de commande appliquée par le dispositif de régulation à l'entrée de commande de l'alternateur. Le vecteur x est un vecteur d'état du système et il regroupe les variables d'état mesurées en sortie de l'alternateur, ainsi que l'erreur e de consigne. Ce vecteur d'état x est alors dit augmenté.

Etant donnée la conception du dispositif de régulation selon l'invention schématisé sur la figure 2, cette variable $u_f$ est de la forme :

$$u_f = - K_\Omega \dot{\Omega} - K_V \dot{V}_S - K_P \dot{P} - K_I (V_S - V_C)$$

Pour obtenir la variable u de commande, il suffit d'intégrer la variable $u_f$ par rapport au temps dans l'expression de la loi de commande précédente.

Selon la présente invention, les gains $K_\Omega$, $K_V$, $K_P$ et $K_I$ sont déterminés pour minimiser l'espérance mathématique de l'énergie associée au vecteur d'état augmenté x et à la variable $u_f$ pour des valeurs incertaines des paramètres de fonctionnement du système, voisines de leur valeur nominale. Dans la modélisation, les paramètres de fonctionnement du système sont regroupés sous la forme d'un vecteur paramètre noté $\theta = (P, V_S, Q, X)$.

Pour ce faire, on considère le modèle augmenté (2) dans lequel les matrices d'état $A(\theta)$ et d'entrée $B(\theta)$ sont fonctions des différents paramètres $\theta = (P, V_S, Q, X)$ du système. Ce modèle augmenté, appelé système augmenté, s'écrit alors sous la forme suivante :

$$\dot{x}(t) = A(\theta)x(t) + B(\theta)u_f(t) \tag{3}$$

$$y(t) = x(t)$$

$$x(O) = x_0.$$

Pour la détermination des gains $K_\Omega$, $K_V$, $K_P$, et $K_I$ du dispositif de régulation, on supposera dans cette modélisation que les paramètres $\theta = (P, V_S, Q, X)$ du système sont invariants dans le temps et indépendants au sens probabiliste de l'état initial $x_0$.

A partir de cette modélisation (3), on définit alors un critère quadratique $J_1$ défini par la relation suivante :

$$J_1 = \lim_{T \to \infty} \frac{1}{T} \int_O^T E[x^T(t,\theta)Q_C x(t,\theta) + u_f{}^T(t,\theta)R_C u_f(t,\theta)]\ dt$$

dans laquelle E désigne l'espérance mathématique, $Q_C$ est une matrice de pondération de l'état, symétrique, semi-définie positive et $R_C$ est une matrice de pondération de la commande, symétrique et définie positive. Des exemples des matrices $Q_C$ et $R_C$ seront données dans la suite de la description.

A partir du critère quadratique $J_1$, on définit un nouveau critère quadratique, noté $J_z$, en effectuant un développement limité au premier ordre du vecteur d'état x et de la variable $u_f$ autour d'une valeur $\bar{\theta}$, en supposant que le vecteur paramètre $\theta$ subit des variations suffisamment petites autour de cette valeur $\bar{\theta}$. La valeur $\bar{\theta}$ est la valeur nominale de $\theta$ et est égale à l'espérance mathématique de $\theta$, c'est-à-dire que $\bar{\theta}=E(\theta)$.

Le résultat de ce calcul classique de développement limité au premier ordre s'exprime de la façon suivante :

$$J_2 = \lim_{T\to\infty} \frac{1}{T}\int_0^T E[\dot{x}^T Q_c \dot{x} + \dot{u}_f{}^T R_c \dot{u}_f + (\nabla_\theta \dot{x})^T (\Sigma_\theta \otimes Q_c)(\nabla_\theta \dot{x}) + (\nabla_\theta \dot{u}_f)^T (\Sigma_\theta \otimes R_c)(\nabla_\theta \dot{u}_f)]dt$$

avec:

$$x(t,\bar{\theta})=\bar{x} \ ; \ u_f(t,\bar{\theta})=\bar{u}_f; \ \nabla_\theta \bar{x}= \begin{bmatrix} \dfrac{\partial x(t,\bar{\theta})}{\partial \theta_1} \\ \cdot \\ \cdot \\ \dfrac{\partial x(t,\bar{\theta})}{\partial \theta_4} \end{bmatrix} \qquad \nabla_\theta \bar{u}_f= \begin{bmatrix} \dfrac{\partial u_f(t,\bar{\theta})}{\partial \theta_1} \\ \cdot \\ \cdot \\ \dfrac{\partial u_f(t,\bar{\theta})}{\partial \theta_4} \end{bmatrix}$$

dans laquelle $\otimes$ représente le produit de Kronecker et $\Sigma_\theta$ est la matrice de covariance de $\tilde{\theta}$ , où $\tilde{\theta} = \theta-\bar{\theta}$ (c'est-à-dire que $\Sigma_\theta=E(\tilde{\theta}\tilde{\theta}^T)$).

Dans cette expression, les premier et second termes représentent respectivement les énergies correspondant au vecteur d'état x et à la variable $u_f$, dérivée de la variable u de commande alors que les troisième et quatrième termes qui sont fonction des dérivées partielles du vecteur d'état x et de la variable $u_f$ par rapport aux paramètres P, $V_S$, Q, X du système représentent respectivement les énergies des sensibilités du vecteur d'état x et de la variable $u_f$ par rapport à de petites variations des paramètres P, $V_S$, Q, X du système regroupés dans le vecteur $\theta = (P, V_S, Q, X)$.

La minimisation du critère quadratique $J_Z$ conduit donc à minimiser la somme de ces quatre énergies. Les deux derniers termes, que l'on ne retrouve pas dans les critères quadratiques classiques assurent un effet de désensibilisation du système régulé vis-à-vis des variations du vecteur $\theta$ regroupant les paramètres P, $V_S$, Q et X.

La minimisation du critère $J_2$ ne peut être effectuée directement, et les gains $K_\Omega$, $K_V$, $K_P$, $K_I$ sont obtenus par une procédure itérative.

Pour ce faire, on définit à chaque étape i des gains notés $K_i = (K_\Omega, K_V, K_P, K_I)_i$, définissant un régulateur dont une représentation d'état s'exprime de manière classique sous la forme suivante :

$$\dot{\xi} = \Phi_i\, \xi + \Gamma_i y \qquad\qquad (4)$$

$$u_f = -G_i\, \xi - H_i y$$

A partir de cette représentation d'état (4) et du modèle linéaire (3) on construit un nouveau système linéaire (5) dit "augmenté" d'un ordre supérieur, s'exprimant sous la forme suivante :

$$\dot{X}_a = A_a X_a + B_a u_f \qquad\qquad (5)$$

$$y(t) = C_a X_a$$

avec :

$$A_a = \begin{bmatrix} A & 0 & 0 \\ A_\theta & I_4 \otimes (A - BH_i) & I_4 \otimes (-BG_i) \\ 0 & I_4 \otimes \Gamma_i & I_4 \otimes \Phi_i \end{bmatrix} ; \quad B_a = \begin{bmatrix} B \\ B_\theta \\ 0 \end{bmatrix} ; \quad C_a = [\, I \quad 0 \quad 0\,] ;$$

$$A_\theta = \begin{bmatrix} \dfrac{\partial A}{\partial \theta_1} \\ \cdot \\ \cdot \\ \dfrac{\partial A}{\partial \theta_4} \end{bmatrix} ; \quad B_\theta = \begin{bmatrix} \dfrac{\partial B}{\partial \theta_1} \\ \cdot \\ \cdot \\ \dfrac{\partial B}{\partial \theta_4} \end{bmatrix} ; \quad X_a = \begin{bmatrix} x \\ \sigma \\ \mu \end{bmatrix} ; \quad \sigma = \begin{bmatrix} \dfrac{\partial x}{\partial \theta_1} \\ \cdot \\ \cdot \\ \dfrac{\partial x}{\partial \theta_4} \end{bmatrix} ; \quad \mu = \begin{bmatrix} \dfrac{\partial \xi}{\partial \theta_1} \\ \cdot \\ \cdot \\ \dfrac{\partial \xi}{\partial \theta_4} \end{bmatrix}$$

Dans cette expression, les variables et leurs dérivées partielles sont évaluées en $\theta = \bar{\theta}$.

En fonction de cette nouvelle modélisation linéaire (5) et en supposant que les gains $K_i$ sont connus, on définit un critère $J_{3i}$ associé et obtenu en appliquant de manière classique la commande linéaire quadratique gaussienne au système modélisé en (5).

Le critère $J_{3i}$ associé s'exprime sous la forme :

$$J_{3i} = \lim_{T \to \infty} \frac{1}{T} \int_0^T E[X_a^T V X_a + u_f^T R_c u_f]\, dt$$

avec :

$$V = \begin{bmatrix} Q_c & 0 & 0 \\ 0 & (\Sigma_\theta \otimes Q_c) + (I_4 \otimes H_i)^T (\Sigma_\theta \otimes R_c)(I_4 \otimes H_i) & (I_4 \otimes H_i)^T (\Sigma_\theta \otimes R_c)(I_4 \otimes G_i) \\ 0 & (I_4 \otimes G_i)^T (\Sigma_\theta \otimes R_c)(I_4 \otimes H_i) & (I_4 \otimes G_i)^T (\Sigma_\theta \otimes R_c)(I_4 \otimes G_i) \end{bmatrix}$$

La minimisation du critère $J_{3i}$ fournit les gains $K_{i+1}$ de l'étape i+1 suivante.

Afin d'initialiser la procédure itérative, la détermination des gains initiaux $K_0$ est obtenue de manière simple. En effet, comme on l'a vu précédemment, les variables d'état $\Omega$, $V_S$, P du système sont entièrement mesurables, les gains $K_0$ sont ainsi obtenus par retour d'état sur le modèle linéaire (3).

Comme on l'a vu précédemment, la loi de commande est telle que la variable $u_f$ s'exprime linéairement en fonction des coefficients du vecteur x. Par conséquent, dans la modélisation (4) associée à ce régulateur, les termes $\Phi$, $\Gamma$ et G sont nuls. Ainsi, à la première itération, l'état $X_a$ du système augmenté (5) est constitué uniquement de x et $\sigma$. Le critère quadratique à minimiser $J_{30}$ correspondant porte sur ces deux grandeurs et sur la variable $u_f$.

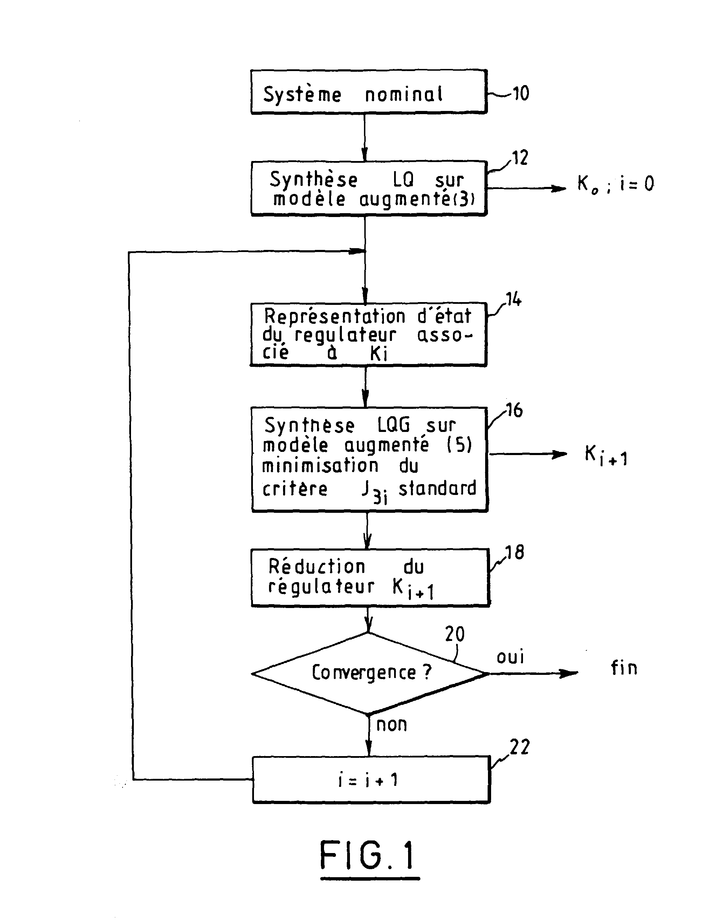

La procédure itérative d'obtention des gains $K_i$ est représentée sur la figure 1. A partir du système nominal correspondant au modèle linéaire augmenté (3) établi à l'étape 10, on détermine à l'étape 12, comme cela vient d'être expliqué, les gains initiaux notés $K_0$ par application d'une commande linéaire quadratique sur le modèle linéaire augmenté (3) et minimisation du critère quadratique associé.

Pour le calcul des gains $K_{i+1}$ suivant, on détermine à l'étape 14 une représentation d'état (4) du dispositif de régulation associé aux gains $K_i$ supposé connu puis on détermine à l'étape 16 un modèle augmenté (5), à partir duquel on minimise de façon classique en utilisant la théorie de la commande linéaire quadratique gaussienne un critère quadratique $J_{3i}$, ce qui permet d'obtenir les gains $K_{i+1}$.

Afin d'éviter que l'ordre de la représentation d'état (4) du dispositif de régulation n'augmente au cours de la mise en oeuvre répétée des étapes itératives, l'ordre de la représentation d'état associée au dispositif de régulation de paramètres $K_{i+1}$ est réduit à chaque itération à l'étape 18 par la méthode de réalisation équilibrée décrite précédem-

EP 0 715 400 B1

ment.

Après cette étape, un critère de convergence détermine à l'étape 20, s'il est nécessaire ou non d'affiner encore la détermination des gains $K_{i+1}$. Si tel est le cas, une nouvelle itération de la procédure itérative est mise en oeuvre à l'étape 22.

A titre indicatif, concernant les alternateurs de type 1300 MW, compte tenu de la réduction de l'ordre de la représentation d'état du dispositif de régulation à chaque étape, on obtient à la fin de la procédure itérative un dispositif de régulation d'ordre deux. Le tracé des lieux de Bode des transferts entre les variables d'état et la variable de commande montre qu'il est possible de réduire encore l'ordre du dispositif de régulation et en particulier de l'amener à zéro en prenant comme paramètre de régulation $K_\Omega$, $K_V$, $K_P$, $K_I$ la moyenne respective de chacun des gains obtenus lors de la procédure itérative, ces paramètres étant considérés comme des fonctions de la fréquence.

Sur la figure 2, on a représenté un schéma synoptique de la régulation d'un alternateur par un dispositif de régulation selon l'invention, ainsi on retrouve un alternateur 50 associé à un dispositif d'excitation 50A. A la sortie de l'alternateur 50 sont mesurées par des capteurs adaptés classiques (non représentés) les variables d'état $\Omega$, $V_S$, P.

A chacune de ces valeurs mesurées correspond une boucle de contre-réaction noté respectivement 52, 54 et 56 munie chacune d'un amplificateur 58, 60 et 62 dont le gain correspond aux gains $K_\Omega$, $K_V$, $K_P$ correspondant respectivement à chacune des variables d'état $\Omega$, $V_S$, P.

On notera que la puissance mécanique $P_m$ est considérée comme une entrée perturbatrice qui n'est pas prise en compte pour la conception du dispositif de régulation. Toutefois, afin de réduire l'effet d'une variation de la puissance mécanique $P_m$ sur la tension statorique $V_s$, la puissance P dans le dispositif de régulation représenté sur la figure 2 est diminuée en 64 de la puissance mécanique $P_m$ mesurée sur la turbine d'entraînement de l'alternateur.

Par ailleurs, le régulateur est conçu en négligeant le dispositif d'excitation 50A qui, en réalité, s'intercale entre la sortie du régulateur et l'entrée de l'alternateur 50. Comme cela est représenté sur la figure 2, un dispositif 50B de compensation de l'excitatrice est disposé si nécessaire entre la sortie du régulateur et l'entrée du dispositif d'excitation 50A.

Une boucle de contre-réaction supplémentaire 66 achemine la valeur de la tension statorique $V_s$ à un dispositif de soustraction 68 calculant la différence de cette valeur et de la valeur de consigne $V_c$. Le résultat de cette différence est ensuite injecté dans un intégrateur 70 avant d'être multiplié par un amplificateur 72 dont le gain correspond au gain $K_I$ calculé comme expliqué précédemment.

La variable u de commande est alors formée à partir des sorties des différents amplificateurs grâce à des dispositifs sommateurs et soustracteurs 74 à 80 suivant un agencement classique permettant de mettre en oeuvre la loi de commande définie plus haut et résultant de l'intégration de l'expression de $u_f$. La variable u est alors envoyée à l'alternateur 50 au travers des dispositifs de compensation de l'excitatrice 50B et d'excitation 50A.

Dans la pratique, bien qu'un tel régulateur puisse être réalisé à partir de dispositifs analogiques, on utilisera de préférence un calculateur numérique, par exemple un ordinateur programmé afin d'engendrer la variable u de commande en fonction des variables d'état $\Omega$, $V_s$, P mesurées en sortie de l'alternateur 50 ainsi que de la consigne $V_c$.

Dans le cas précis d'un alternateur, parmi les quatre paramètres P, $V_S$, Q, X de l'alternateur tels que définis précédemment et utilisés dans la modélisation, la tension statorique $V_S$ et la longueur de ligne X sont ceux qui influent le plus sur la stabilité du système. En effet, il est difficile de stabiliser un alternateur connecté à un réseau quand la longueur de ligne X est grande ou encore quand la tension statorique $V_S$ est basse. Par contre, les variations de puissance active P et de puissance réactive Q ont une influence moins significative sur la stabilité. Ces différentes considérations permettent de concevoir un dispositif de régulation désensibilisé uniquement par rapport à la longueur de ligne X et la tension statorique $V_S$. Ainsi, pour les calculs, le vecteur $\theta$ est réduit à deux composantes.

En ce qui concerne le choix des matrices de pondération $Q_C$ et $R_C$, la matrice $Q_C$ étant semi-définie positive, elle est souvent choisie diagonale, ces coefficients diagonaux étant notés $q_{ii}$ pour $i \in \{1,2,3,4\}$.

On sait que lors de la conception d'un dispositif de régulation par commande linéaire quadratique, il faut systématiquement commencer par pondérer la variable à réguler (dans ce cas, la tension statorique $V_s$) ainsi que l'intégrale de l'erreur de consigne e. Les autres variables d'état (ici $\Omega$ et P) ont uniquement un rôle stabilisateur et ne sont éventuellement pondérées que dans le but d'améliorer les marges de stabilité.

Dans le cas présent, la variable à réguler est la tension statorique $V_S$. Il faut donc limiter les variations de cette grandeur et la rendre voisine de sa valeur de consigne $V_C$ le plus rapidement possible. La pondération importante de la tension statorique $V_S$ à travers le coefficient $q_{22}$ induit un grand gain sur la tension, ce qui limite ces variations. Le coefficient de pondération $q_{44}$ sur l'intégrale de l'erreur e entre la valeur de consigne $V_C$ et la tension statorique $V_S$ influe sur la rapidité avec laquelle la valeur de consigne $V_C$ est rattrappée. Ainsi, plus la valeur $q_{44}$ est grande, plus la tension statorique $V_s$ rejoint rapidement la valeur de consigne $V_c$.

Par ailleurs, la puissance électrique P et la vitesse $\Omega$ ont un rôle stabilisateur. De plus, on constate que si les gains sur la vitesse $\Omega$ et la puissance active P sont trop importants, une variation de la fréquence du réseau, qui influe beaucoup sur ces deux grandeurs, se répercute alors sur la tension statorique $V_S$ à réguler. Une façon de limiter l'influence de cette perturbation sur la tension statorique $V_S$ est donc de réduire les gains sur la vitesse $\Omega$ et la puissance

7

électrique P. Ainsi, les coefficients de pondération $q_{11}$ et $q_{33}$ sont pris nuls.

Concernant la matrice de pondération $R_C$, celle-ci est prise égale à un nombre réel positif. Sa valeur est choisie de façon à obtenir sur l'ensemble du domaine de fonctionnement une marge de retard suffisante pour garantir la robustesse vis-à-vis des dynamiques négligées lors de la linéarisation du modèle de l'alternateur. Ainsi, plus le nombre choisi pour la matrice $R_C$ est grand, plus la marge de retard est grande.

Pour le choix des différents paramètres, il est nécessaire de prendre en compte le fait que les performances obtenues dépendent des coefficients de la matrice $Q_C$, alors que la robustesse non paramétrique dépend du choix de la matrice $R_C$ et la robustesse paramétrique dépend du choix de la matrice $\Sigma_\theta$ et augmente avec celle-ci.

Du fait de l'existence d'un compromis entre la robustesse et la performance, les coefficients de ces matrices ne sont pas déterminés indépendamment les uns des autres mais dans le but de réaliser le meilleur compromis possible.

**Revendications**

1. Dispositif de régulation de la tension statorique (variable à régler $V_s$) d'un alternateur (50) couplé à un réseau électrique, ce dispositif résultant d'une approximation linéaire de l'alternateur couplé au réseau électrique autour d'un point de fonctionnement nominal défini par plusieurs paramètres (P, $V_S$, Q, X) de fonctionnement de l'alternateur et comportant plusieurs boucles de contre-réaction (52, 54, 56, 66) associées à des gains ($K_\Omega$, $K_V$, $K_P$, $K_I$) respectifs agissant sur plusieurs variables d'état ($\Omega$, $V_S$, P) mesurées en sortie de l'alternateur ainsi que sur l'intégrale d'une erreur (e) de consigne définie par la différence entre la tension statorique ($V_S$) et une valeur de consigne ($V_C$), pour définir à partir de la valeur de consigne ($V_C$), une variable (u) de commande de l'alternateur appliquée à l'entrée de celui-ci pour maintenir la valeur de la tension statorique ($V_S$) proche de la valeur de consigne ($V_C$), caractérisé en ce que les gains ($K_\Omega$, $K_V$, $K_P$, $K_I$) du dispositif sont obtenus par minimisation de l'espérance mathématique d'un critère quadratique ($J_2$) qui est fonction d'un vecteur d'état (x) regroupant les dérivées par rapport au temps des variables d'état ($\Omega$, $V_S$, P) de l'alternateur et l'erreur (e) de consigne et de la dérivée ($u_f$) par rapport au temps de la variable (u) de commande, ces variables étant respectivement l'état et l'entrée d'un modèle linéaire (3), appelé système augmenté, dont la matrice d'état ($A(\theta)$) et la matrice d'entrée ($B(\theta)$) dépendent de plusieurs des paramètres (P, $V_S$, Q, X) de l'alternateur et en ce que les gains ($K_\Omega$, $K_V$, $K_P$, $K_I$) sont déterminés pour minimiser en outre les sensibilités du vecteur d'état (x) et de la dérivée par rapport au temps de la variable (u) de commande relativement à de petites variations d'au moins l'un desdits plusieurs paramètres (P, $V_S$, Q, X) de l'alternateur autour du point de fonctionnement nominal créant ainsi une désensibilisation de l'alternateur régulé vis-à-vis desdits plusieurs paramètres (P, $V_s$, Q, X).

2. Dispositif de régulation selon la revendication 1, caractérisé en ce que ledit critère quadratique ($J_2$) est fonction des dérivées partielles du vecteur d'état (x) et de la dérivée par rapport au temps de la variable (u) de commande par rapport aux paramètres (P, $V_s$, Q, X) de l'alternateur et en ce que la désensibilisation de l'alternateur régulé est réalisée par minimisation dudit critère quadratique ($J_2$).

3. Dispositif de régulation selon l'une quelconque des revendications précédentes, caractérisé en ce que le modèle linéaire (1) duquel résultent les variables d'état ($\Omega$, $V_s$, P) utilisées dans le vecteur d'état (x) est un modèle réduit à un ordre inférieur d'un modèle linéaire complet (0) par une méthode de réalisation équilibrée consistant à minimiser une norme de la différence entre la matrice de transfert du modèle complet et celle du modèle réduit.

4. Dispositif de régulation selon l'une quelconque des revendications précédentes, caractérisé en ce que les gains ($K_\Omega$, $K_V$, $K_P$, $K_I$) sont déterminés par une méthode itérative consistant à réaliser à chaque étape une synthèse des gains (($K_\Omega$, $K_V$, $K_P$, $K_I$)$_{i+1}$) par une méthode de commande linéaire quadratique gaussienne, consistant à minimiser un critère quadratique ($J_{3i}$), appliquée à un modèle augmenté (5) fonction d'une représentation d'état (4) du dispositif de régulation obtenu avec les gains (($K_\Omega$, $K_V$, $K_P$, $K_I$)$_i$) calculés à l'étape précédente et de la modélisation linéaire (3) du système augmenté.

5. Dispositif de régulation selon la revendication 4, caractérisé en ce que chaque étape de synthèse des gains ($K_\Omega$, $K_V$, $K_P$, $K_I$) est suivie par une réduction à un ordre inférieur de la représentation d'état (4) associée à ces gains par une méthode de réalisation équilibrée.

6. Dispositif de régulation selon l'une quelconque des revendications précédentes, caractérisé en ce que les variables d'état sont la vitesse angulaire ($\Omega$), la tension statorique ($V_S$) et la puissance électrique (P).

**Patentansprüche**

1. Einrichtung zum Regeln der Statorspannung (zu regelnde Variable $V_s$) eines an einem elektrischen Netz liegenden Wechselstromgenerators (50), wobei die Einrichtung aus einer linearen Näherung des am elektrischen Netz liegenden Wechselstromgenerators um einen durch mehrere Betriebsparameter (P, $V_s$, Q, X) des Wechselstromgenerators definierten Nennbetriebspunkt herum hervorgeht und mehrere Rückkopplungsschleifen (52, 54, 56, 66) mit einer jeweiligen Verstärkung ($K_\Omega$, $K_V$, $K_P$, $K_I$) aufweist, die auf mehrere am Ausgang des Wechselstromgenerators gemessene Zustandsvariable ($\Omega$, $V_s$, P) sowie auf das Integral einer durch die Differenz zwischen der Statorspannung ($V_s$) und einem Sollwert ($V_c$) definierten Sollwertabweichung (e) wirken, um ausgehend vom Sollwert ($V_c$) eine Steuervariable (u) des Wechselstromgenerators zu bilden, die an dessen Eingang gelegt wird, um den Wert der Statorspannung ($V_s$) nahe beim Sollwert ($V_c$) zu halten, dadurch gekennzeichnet, daß die Verstärkungen ($K_\Omega$, $K_V$, $K_P$, $K_I$) der Einrichtung durch Minimierung des mathematischen Erwartungswerts eines quadratischen Kriteriums ($J_2$) gewonnen werden, das eine Funktion eines Zustandsvektors (x), der die zeitlichen Ableitungen der Zustandsvariablen ($\Omega$, $V_s$, P) des Wechselstromgenerators und die Sollwertabweichung (e) umfaßt, und der zeitlichen Ableitung ($u_f$) der Steuervariablen (u) ist, wobei diese Variablen der Zustand und der Eingang eines als erweitertes System bezeichneten linearen Modells (3) sind, dessen Zustandsmatrix ($A(\theta)$) und Eingangsmatrix ($B(\theta)$) von mehreren der Parameter (P, $V_s$, Q, X) des Wechselstromgenerators abhängen, und daß die Verstärkungen ($K_\Omega$, $K_V$, $K_P$, $K_I$) so bestimmt werden, daß zusätzlich die Empfindlichkeit des Zustandsvektors (x) und die Empfindlichkeit der zeitlichen Ableitung der Steuervariablen (u) bezüglich kleiner Änderungen mindestens eines der mehreren Parameter (P, $V_s$, Q, X) des Wechselstromgenerators um den Nennbetriebspunkt herum minimiert werden, so daß eine Desensibilisierung des geregelten Wechselstromgenerators bezüglich der mehreren Parameter (P, $V_s$, Q, X) erreicht wird.

2. Regeleinrichtung nach Anspruch 1, dadurch gekennzeichnet, daß das quadratische Kriterium ($J_2$) eine Funktion der partiellen Ableitungen des Zustandsvektors (x) und der zeitlichen Ableitung der Steuervariablen (u) bezüglich der Parameter (P, $V_s$, Q, X) des Wechselstromgenerators ist und daß die Desensibilisierung des geregelten Wechselstromgenerators durch Minimierung des quadratischen Kriteriums ($J_2$) erfolgt.

3. Regeleinrichtung nach einem der vorangehenden Ansprüche, dadurch gekennzeichnet, daß das lineare Modell (1), aus dem die im Zustandsvektor (x) verwendeten Zustandsvariablen ($\Omega$, $V_s$, P) hervorgehen, ein Modell ist, das auf eine unterhalb der Ordnung eines vollständigen linearen Modells (0) liegende Ordnung reduziert ist, und zwar mittels eines ausgewogenen Realisierungsverfahrens, das darin besteht, eine Norm der Differenz zwischen der Übertragungsmatrix des vollständigen Modells und der Übertragungsmatrix des reduzierten Modells zu minimieren.

4. Regeleinrichtung nach einem der vorangehenden Ansprüche, dadurch gekennzeichnet, daß die Verstärkungen ($K_\Omega$, $K_V$, $K_P$, $K_I$) mittels eines Iterationsverfahrens bestimmt werden, das darin besteht, bei jedem Durchlauf eine Synthese der Verstärkungen (($K_\Omega$, $K_V$, $K_P$, $K_I)_{i+1}$) mittels eines linearen quadratischen Gaußschen Steuerverfahrens zu erzielen, das in der Minimierung eines quadratischen Kriteriums ($J_{3i}$) besteht und auf ein erweitertes Modell (5) angewandt wird, das eine Funktion einer Zustandsdarstellung (4) der Regeleinrichtung, die mit den im vorangehenden Durchlauf errechneten Verstärkungen (($K_\Omega$, $K_V$, $K_P$, $K_I)_i$) gewonnen wurde, und der linearen Modellierung (3) des erweiterten Systems ist.

5. Regeleinrichtung nach Anspruch 4, dadurch gekennzeichnet, daß nach jedem der Synthese der Verstärkungen ($K_\Omega$, $K_V$, $K_P$, $K_I$) dienenden Durchlauf die diesen Verstärkungen zugeordnete Zustandsdarstellung (4) mittels eines ausgewogenen Realisierungsverfahrens auf eine niedrigere Ordnung reduziert wird.

6. Regeleinrichtung nach einem der vorangehenden Ansprüche, dadurch gekennzeichnet, daß die Zustandsvariablen die Winkelgeschwindigkeit ($\Omega$), die Statorspannung ($V_s$) und die elektrische Leistung (P) sind.

**Claims**

1. Arrangement for regulating the stator voltage (variable $V_S$ to be controlled) of an alternator (50) coupled to an electric network, this arrangement resulting in a linear approximation of the alternator coupled to the electric network around a nominal operating point defined by a number of operating parameters (P, $V_S$, Q, X) of the alternator and comprising a number of associated counter-reaction loops (52, 54, 56, 66) having respective gains ($K_\Omega$, $K_V$, $K_P$, $K_I$) acting on a number of variables of state ($\Omega$, $V_S$, P) measured at the output of the alternator as well as on the integral of a design error (e) defined by the difference between the stator voltage ($V_S$) and a design value ($V_c$) for defining, starting from the design value ($V_C$), a variable (u) for controlling the alternator applied to the input of the latter for maintaining the value of the stator voltage ($V_S$) near the design value ($V_C$), characterised in that the gains ($K_\Omega$, $K_V$, $K_P$, $K_I$) of the arrangement are obtained by minimisation of the mathematical expectation of a quadratic criterion ($J_2$) which is a function of a state vector (x) regrouping the derivatives with respect to time of the state variables ($\Omega$, $V_S$, P) of the alternator and the design error (e) and of the derivative ($u_f$) with respect to time of the control variable (u), these variables being respectively the state at the input of a linear model (3), defined as an augmented system, of which the state matrix ($A(\theta)$) and the input matrix ($B(\theta)$) depend on a number of parameters (P, $V_S$, Q, X) of the alternator and in that the gains ($K_\Omega$, $K_V$, $K_P$, $K_I$) are determined to minimise in addition the sensitivities of the state vector (x) and of the derivative with respect to time of the control variable (u) relative to small variations in at least one of the said number of parameters (P, $V_S$, Q, X) of the alternator around the nominal operating point thus creating a desensitisation of the regulated alternator with respect to the said number of parameters (P, $V_S$, Q, X).

2. Regulating arrangement according to claim 1, characterised in that the said quadratic criterion ($J_2$) is a function of the partial derivatives of the state vector (x) and of the derivative with respect to time of the control variable (u) with respect to the parameters (P, $V_S$, Q, X) of the alternator and in that the desensitisation of the regulated alternator is achieved by minimisation of the said quadratic criterion ($J_2$).

3. Regulating arrangement according to any one of the foregoing claims, characterised in that the linear model (1) of the said resultant of the state variables ($\Omega$, $V_S$, P) used in the state vector (x) is a model reduced to a lower order of a complete linear model (O) by a balanced method of realisation consisting in minimising a norm of the difference between the transfer matrix of the complete model and that of the reduced model.

4. Regulating arrangement according to any one of the foregoing claims, characterised in that the gains ($K_\Omega$, $K_V$, $K_P$, $K_I$) are determined by an iterative method consisting in realising at each stage a synthesis of the gains (($K_\Omega$, $K_V$, $K_P$, $K_I)_{i+1}$) by a gaussian linear quadratic control method consisting in minimising a quadratic criterion ($J_{3i}$) applied to an augmented model (5) as a function of a representation of the state (4) of the regulating arrangement obtained with the gains (($K_\Omega$, $K_V$, $K_P$, $K_I)_i$) calculated at the preceding stage and of the linear modelling (3) of the augmented system.

5. Regulating arrangement according to claim 4, characterised in that each stage of the synthesis of the gains (($K_\Omega$, $K_V$, $K_P$, $K_I$) is followed by a reduction to a lower order of the representation of the state (4) associated with these gains by a balanced method of realisation.

6. Regulating arrangement according to any one of the foregoing claims, characterised in that the variables of state are the angular velocity ($\Omega$), the stator voltage ($V_S$) and the electric power (P).

Système nominal — 10

Synthèse LQ sur modèle augmenté (3) — 12 → $K_o$ ; $i = 0$

Représentation d'état du régulateur associé à $K_i$ — 14

Synthèse LQG sur modèle augmenté (5) minimisation du critère $J_{3i}$ standard — 16 → $K_{i+1}$

Réduction du régulateur $K_{i+1}$ — 18

Convergence ? — 20 → oui → fin

non

$i = i + 1$ — 22

## FIG.1

FIG.2